# EUROPÄISCHE PATENTSCHRIFT

(11) **EP 1 008 568 B1**
(45) Veröffentlichungstag und Bekanntmachung des Hinweises auf die Patenterteilung: **12.05.2004**
(21) Anmeldenummer: 99124249.6
(22) Anmeldetag: 04.12.1999
(51) Int. Cl.: C04B 28/00, C04B 40/00, C04B 111/34

(54) **Fliessestrich -Trockenmischung mit wenigstens zwei pulverförmigen Mehlkornanteilen**
Self smoothing floor pavement dry mixture containing at least two powdery floury fractions
Mélange sec pour chape auto-nivelante contenant au moins deux fractions farineuses

(30) Priorität: 12.12.1998 DE 19857728
(43) Veröffentlichungstag der Anmeldung: 14.06.2000
(73) Patentinhaber: maxit Deutschland GmbH, 79206 Breisach (DE)
(72) Erfinder: Reisch, Bruno, 79104 Freiburg (DE); Zimmerer, Wilhelm, 79206 Breisach (DE); Schopp, Bernhard, 79283 Bollschweil-St.Ulrich (DE); Wetzel, Heinz, 79588 Efringen-Kirchen (DE)
(74) Vertreter: Patent- und Rechtsanwaltssozietät, Maucher, Börjes & Kollegen

(56) Entgegenhaltungen:
- EP-A- 0 323 577
- WO-A-92/02469
- WO-A-95/05350
- FR-A- 2 704 853

## Beschreibung

Die Erfindung betrifft eine Fließestrich-Trockenmischung mit wenigstens zwei pulverförmigen Mehlkornanteilen, nämlich Zement und pulverförmigem Füller, ferner mit Stand und/oder Kies im übrigen Kalziumsulfatfrei.

Derartige Baustoffmischungen sind in unterschiedlichen Zusammensetzungen und Mischungsverhältnissen bekannt. Insbesondere sind solche Baustoffmischungen für Fließestrich auf Anhydritbasis seit langem bekannt. In den letzten Jahren wird neben Anhydrit auch Alphahalbhydrat als Bindemittel eingesetzt. Solche gipsgebundenen Fließestriche zeichnen sich neben dem einfachen Einbau durch geringe Verformungen während des Austrocknens aus, so daß relativ große Flächen fugenlos verlegt werden können. Wegen der Feuchteempfindlichkeit von Gips sind sie allerdings im wesentlichen auf den Innenbereich, also das Innere von Gebäuden beschränkt. Für Dauernaßbereiche und/oder den Bereich außerhalb von Gebäuden sind sie nicht geeignet. Daraus ergibt sich der Nachteil, daß je nach Gebäude zur Herstellung des Estrichs wenigstens zwei verschiedene Produkte bzw. Baustoffmischungen erforderlich sind, nämlich gipsgebundener Fließestrich, der wegen seiner leichten Verarbeitbarkeit geschätzt wird, und daneben konventionell zusammengesetzter und eingebrachter Zementestrich für Dauernaßbereiche und den Außenbereich.

Es wurden zahlreiche Versuche unternommen, Fließestriche auf Zementbasis, also Baustoffmischungen der eingangs genannten Art, herzustellen, bei denen die vorgenannten Nachteile vermieden werden:

In EP 0 427 064 B1 wird ein hydraulisches Bindemittel unter anderem zur Herstellung von Fließestrich beschrieben. Wesentlich ist dabei die Verwendung von aluminatarmen Zementen (C₃A-Gehalt < als 3%) in Kombination mit Calciumsulfat-Alphahalbhydrat und feinteiliger Kieselsäure. Auf diese Weise soll die Bildung von Ettringit unterbunden werden. Gemäß Beispiel 2 soll dabei ein Estrich ohne Dehnungsfugen im Innen- und Außenbereich ermöglicht werden.

In DE 44 10 130 C1 wird ein Zementfließestrich beschrieben, der rissefrei sein soll und dessen Bindemittel aus einer Kombination von Portlandzement und einer reaktiven Calciumsulfatkomponente besteht, um die maximal mögliche Menge an Ettringit zu bilden. Wesentlich soll dabei sein, daß nach dem Erhärten ein Überangebot von Calciumsulfat-Dihydrat vorliegt, um die Stabilität des gebildeten Ettringits zu gewährleisten.

In der DE 44 10 850 C2 wird ein Verfahren zur Herstellung eines Bindemittels für hydraulisch abbindende Fließestriche beschrieben, wobei dieses Bindemittel aus einer Mischung aus Calciumsulfat, gemahlenem Hüttensand und Tonerdezement und/oder Tonerdeschmelzzement bestehen soll. Dadurch soll der Ettringit bereits zu Beginn der Erhärtung gebildet werden, so daß von ihm keine schädigende Wirkung ausgeht.

Aus DE 195 01 074 A1 ist die Verwendung von Zitronensäure, Weinsäure oder deren Salze für Expansionszemente in einer Mischung aus Gips, Portlandzement und Tonerdezement bekannt, wobei durch die organischen Säuren bzw. deren Salze erreicht werden soll, daß die Ettringitbildung abgeschlossen ist, bevor die Bildung der Zementphasen einsetzt.

In der EP 0 573 036 B1 wird die Verwendung von Polypropylenglykol als schwindungsreduzierender Zusatz beschrieben. Dabei wird zwar gegenüber Mischungen ohne diesen Zusatz eine Verbesserung des Schwindmaßes erreicht, jedoch liegt der absolute Wert mit einem Schwindmaß von 0,7 mm/m nach 28 Tagen für die praktische Anwendung in schwimmenden Estrichkonstruktionen immer noch zu hoch.

In gleicher Weise ist aus der EP 0 308 950 B1 die Verwendung von Alkandiolen zur Reduzierung des Schwindmaßes bekannt. Abzeptable Schwindmaße von 0,43 mm/m nach 28 Tagen werden jedoch nur bei Wasser-Zement-Werten der Mischung von 0,5 erreicht. Dies ist zwar bei Laborversuchen, nicht jedoch in der Praxis erreichbar.

Gemäß der DE 44 14 999 A1 soll eine Schwindkonpensation dadurch erreicht werden, daß ein Stoff in gelöster Form dem Mörtel zugegeben wird, wobei dieser bei der Austrocknung des Baustoffes ausfällt und daher ein größeres Volumen beansprucht als in gelöster Form.

In DE 33 28 898 wird eine Trockenmischung für einen Estrich beschrieben, wobei in Bezug auf eine eventuelle Rissebildung die Verwendung von Calciumsulfat oder Quellzementen zur Schwindkompensation, also Ettringitbildung, vorgeschlagen wird.

Die vorstehend beschriebenen Systeme stellen alle komplizierte Mehrstoff-Systeme dar, was das oder die Bindemittel betrifft. Die einzelnen Komponenten der jeweiligen Mischungen müssen dabei genau aufeinander abgestimmt sein. Außer für bauchemische Produkte finden diese Systeme bisher keinen Einsatz in nennenswertem Umfang. Grund dafür ist unter anderem die starke Temperaturabhängigkeit der Quelleigenschaften bei der Ettringitbildung sowie eine deutliche Abhängigkeit von der Menge des Anmachwassers.

Eine Verwendung als schwindarmer Zementfließestrich schließt sich daher aus, da zu dem Zeitpunkt des Verlegens von Estrich entsprechende Gebäude in der Regel nicht beheizt werden können.

In DE 295 18 306 U1 wird ein selbstnivellierender Zementfließestrich auf Basis von Portlandzement und Steinkohleflugasche beschrieben, wobei Wasser-Zement-Werte von 0,35 bis 0,65 einzuhalten sind. Bei einem Wasser-Zement-Wert von 0,35 ist das Material jedoch sehr schwer zu verarbeiten, während bei einem Wasser-Zement-Wert von 0,65 selbst bei kleinen Flächen Schwindrisse und Aufschüsselungen beobachtet wurden. Im mittleren Bereich, bei einem Wasser-Zement-Wert von 0,5, sind in der Praxis Feldgrößen von maximal 30 m² ohne Fugen möglich. Dies entspricht den Feldgrößen, die auch bei konventionellen Zementestrichen praktiziert werden. Bei größeren Feldgrößen muß mit Rissebildung gerechnet werden. Nachteilig ist außerdem, daß das Fließmittel bei diesem Zementfließestrich erst an der Baustelle in den Fahrmischer gegeben werden darf, wodurch ein Zeitverlust durch die zusätzlich notwendige Mischzeit entsteht.

Der Erfindung liegt deshalb die Aufgabe zugrunde, eine Fließestrich-Trockenmischung der eingangs genannten Art zu schaffen, mit welcher ein Fließestrich hergestellt werden kann, der eine verminderte Rissebildung aufweist, also größere Feldgrößen ohne Fugen ermöglicht. Dabei soll im praxisnahen Bereich bei Wasser-Zement-Werten von beispielsweise 0,5, 0,6 bis 0,8 ein Trocknungsschwinden von nur ca. 0,3 mm/m auftreten und damit eine Feldgröße von zum Beispiel 200 m² ohne Fugen ermöglicht werden.

Die vorstehende Aufgabe wird gemäß der Erfindung im wesentlichen dadurch gelöst, daß die eingangs genannte Fließestrich-Trockenmischung dadurch gekennzeichnet ist, daß die Darstellung der kumulativen Gewichtsprozentanteile der Mehrkornanteile der Gesamtmischung in einer Größe von 0,001 mm bis 0,2 mm über ihrer zunehmenden, logarithmisch dargestellten Größenverteilung einen linearen oder im wesentlichen linearen Verlauf ergibt. Die vorstehende Aufgabe wird mit dem Mitteln und Merkmalen des Patentanspruchs 1 gelöst.

Versuche haben gezeigt, daß bei einer derartigen Einstellung der feinen Mischungsbestandteile oder Mehlkornanteile nach dem Anmachen der Mischung und dem Zufügen eines Fließmittels im plastischen Zustand zunächst kein oder nur ein sehr geringes Schrumpfen einsetzt, weil sich die Masse selbsttätig nahezu optimal verdichtet, was bei üblichen Betonen durch den Einsatz von Rüttlern erreicht werden muß. Diese optimale Verdichtung kann darauf zurückgeführt werden, daß Zwischenräume zwischen größeren Körnern und Bestandteilen mit dem in günstiger Verteilung vorhandenen Feinkorn und Feinstkorn bestmöglich ausgefüllt werden. Ferner hat sich gezeigt, daß bei dem anschließenden Trocknungsvorgang dann nur ein relativ geringes Schwinden stattfindet und vor allem kaum oder keine Risse auftreten, selbst wenn die angemachte Trockenmischung als Fließestrich über große Flächen von beispielsweise 100 m² oder sogar 200 m² fugenlos aufgetragen oder verlegt wird.

Unter Schrumpfen wird dabei die Verformung eines Estrichs in den ersten Stunden nach der Mischung und Verteilung verstanden, während die angemachte Masse noch plastisch ist. Überraschenderweise wurde gefunden, daß bei gleichem Ausmaß des Trocknungsschwindens die Risseanfälligkeit um so geringer ist, je geringer das Schrumpfen in dieser ersten Phase des Abbindens ist. Zwar war schon bekannt, daß sehr hohe Schrumpfwerte in den ersten Tagen des Auftragens einer Estrichschicht zur Rissebildung in Bauteilen führen, nämlich zu sogenannten Frühschwindrissen, jedoch wird erstmals durch die vorliegende Erfindung ein Zusammenhang zwischen dem Schrumpfmaß und der Rissebildung beim anschließenden Austrocknen und damit Schwinden hergestellt.

Es wird davon ausgegangen, daß durch starkes Schrumpfen während des Erstarrens der Baustoffmasse die Verfilzung der sich bildenden Kristalle der Bindemittelmatrix gestört werden. Obwohl dies - außer bei sehr hohen Schrumpfwerten - makroskopisch nicht als Riß zu erkennen ist, da die Masse noch plastisch ist, wird das sich bildende Gefüge in diesem Bereich gestört. Beim anschließend viel später einsetzenden Trocknungsschwinden kommt es dann an diesen Schwachstellen zur Rissebildung, die durch die Erfindung nun vermieden wird, indem das Schrumpfmaß sehr klein gehalten oder weitgehend vermieden wird.

Die Fließestrich-Trockenmischung kann als zusätzlichen Mischungsbestandteil ein ihr in trockenem Zustand oder beim Anmischen mit Flüssigkeit zugemischtes Fließmittel enthalten. Dadurch kann die Eigenschaft der Baustoffmischung weiter gesteuert werden.

Dabei ist es zweckmäßig, wenn die Mengen- und Gewichtsanteile der weiteren Bestandteile wie Sand, Kies oder dergleichen nach DIN 1045 gewählt sind. In vorteilhafter Weise braucht also bezüglich der überwiegenden Mengen der Mischungsbestandteile nicht von der herkömmlichen Technik abgewichen zu werden. Die Erfindung liegt vielmehr darin, die Feinst- oder Mehlkornanteile in der genannten Weise zu wählen, um in überraschender Weise große Flächen von Fließestrich fertigen zu können und dennoch eine weitgehende Rissefreiheit zu erzielen.

Eine weitere Ausgestaltung der Erfindung kann darin bestehen, daß die Fließestrich-Trockenmischung als weiteren pulverförmigen Mehlkornanteil Branntkalk in der Feinkörnung bis etwa 0,2 mm Korngröße enthält und die Mengenverhältnisse dieses Branntkalk-Anteiles an die Mengenverhältnisse der anderen Mehlkornoder Feinkornbestandteile so angepaßt ist, daß in der logarithmischen Darstellung ein linearer oder weitgehend linearer Verlauf gegeben ist. Dadurch kann nämlich erreicht werden, daß nach dem eventuellen ersten geringfügigen Schrumpfen der angemachten und ausgetragenen, noch plastischen Baustoffmasse eine Expansion auftritt, bevor dann der endgültige Trocknungsprozeß einsetzt, so daß das erwähnte Schrumpfen in der plastischen Phase ganz oder teilweise kompensiert oder gegebenenfalls sogar etwas überkompensiert wird. In gewissen Grenzen kann dabei eine derartige Überkompensation vor allem für großflächige Verarbeitungen vorteilhaft sein, denn Versuche haben gezeigt, daß bei einer Überkompensation des vorhergehenden Schrumpfens in der plastischen Phase die Rissebildung in der Trocknungsphase gering ist.

Das der Fließestrich-Trockenmischung zugemischte oder mit der Anmachflüssigkeit zumischbare Fließmittel kann aus Melamin-Formaldehyd-Polykondensaten und/oder kondensierten Naphtalinsulfonaten und/oder Ligninsulfonaten und/oder kondensierten Phenol-Formaldehyd-Polymerisaten und/oder carboxylierten Polyäthern bestehen. Somit kann auch das Fließmittel, gewählt und angepaßt werden.

Die Fließestrich-Trockenmischung kann einen weiteren pulverförmigen Mehlkornanteil wie Flugasche enthalten, der sich bei solchen Baustoffmischungen unter bestimmten Umständen bewährt hat. Ferner kann die Fließestrich-Trockenmischung - in an sich bekannter Weise - Abbindeverzögerer oder Abbindebeschleuniger enthalten.

Die Erfindung betrifft auch ein Verfahren zum Herstellen einer Fließestrich-Trockenmischung, wobei Sand und/oder Kies mit wenigstens zwei pulverförmigen Mehlkornanteilen, nämlich Zement und einem pulverförmigen Füller, gemischt werden.

Dabei wird die eingangs genannte Aufgabe mit den Mitteln und Merkmalen des Patentanspruchs 8 gelöst.

Es hat sich gezeigt, dass beim Anmachen einer derartigen Fließestrich-Trockenmischung eine praktisch selbsttätige Verdichtung erfolgt, weil die in entsprechender Verteilung vorhandenen Mehlkornanteile die Zwischenräume zwischen den Bestandteilen mit größeren Korngrößen praktisch selbsttätig ausfüllen können. Dies führt dazu, daß in der noch plastischen Phase allenfalls ein geringes Schrumpfen auftritt, so daß in der späteren Trocknungsphase auch die Gefahr einer Rissebildung erheblich vermindert ist.

Die Optimierung der Mehlkornanteile erfolgt dabei zweckmäßigerweise bis zu einer Korngröße von kleiner oder gleich 0,2 mm hinsichtlich ihre Gewichtsanteiles, das heißt die Feinkornanteile werden mit einer Korngröße von bis zu 0,2 mm zugemischt.

Die Korngrößenverteilung kann mit einem Laserkranulometer bestimmt werden. Ferner kann der Trockenmischung wenigstens ein weiterer pulverförmiger Mehlkornanteil wie Flugasche in trockenem Zustand zugemischt werden.

Ferner ist es möglich, daß der Trockenmischung als weiterer Feinkorn- oder Mehlkornanteil Branntkalk in der Feinkörnung bis 0,2 mm zugemischt und die Gewichtsanteile der einzelnen Kornfraktionen dieser Gesamtmischung von Mehlkornanteilen so eingestellt werden, daß in der logarithmischen Darstellung dieser im Feinkornbereich liegenden Gewichtsanteile aller Feinkornanteile ein linearer oder weitgehend linearer Verlauf entsteht. Durch diesen Branntkalk-Anteil kann erreicht werden, daß nach einem ersten geringfügigen Schrumpfen der noch plastischen angemachten Baustoffmasse eine Expansion auftritt, bevor der endgültige Trocknungsprozeß einsetzt, so daß das Schrumpfen in der plastischen Phase ganz oder teilweise kompensiert oder eventuell sogar überkompensiert wird, was die Gefahr einer Rissebildung in dem anschließenden Trocknungsprozeß stark vermindert.

Der Trockenmischung oder der Anmachflüssigkeit kann ein Fließmittel, beispielsweise Melamin-Formaldehyd-Polykondensate und/oder kondensierte Naphtalinsulfonate und/oder Ligninsulfonate und/oder kondensierte Phenol-Formaldehyd-Polymerisate und/oder carboxylierte Polyäther zugemischt werden. Es kann also ein übliches Fließmittel aus einem oder mehreren bekannten Stoffen verwendet und an die jeweilige Mischung zu deren Optimierung angepaßt werden. Ferner können der Trockenmischung in bekannter Weise ein oder mehrere Abbindeverzögerer oder Abbindebeschleuniger zugemischt werden. Die oberhalb der Korngröße der Feinkorn- oder Mehlkornanteile bemessenen Mischungsbestandteile, insbesondere Sand und/oder Kies können nach den Regeln der Betontechnik, beispielsweise nach DIN 1045 zugemischt werden.

Vor allem bei Kombination einzelner oder mehrerer der vorbeschriebenen Merkmale und Maßnahmen läßt sich ein Zementfließestrich in einer Feldgröße von bis zu 200 m² rissefrei verlegen, indem folgende Anforderungen erfüllt werden:

| | |
|---|---|
| Wasserbedarf | 11 - 12 % |
| Fließmaß | 22 - 25 cm |
| Frischmörtelgewicht | 2,10 - 2,20 g/cm³ |
| Schrumpfen | max. - 0,1 mm/m |
| Quellen | max. + 0,2 mm/m |
| Trocknungsschwinden | max. - 0,4 mm/m |

Nachstehend ist die Erfindung anhand von Beispielen und mit Hilfe von zu diesen Beispielen gehörenden Diagrammen näher erläutert:

### Beispiel 1:

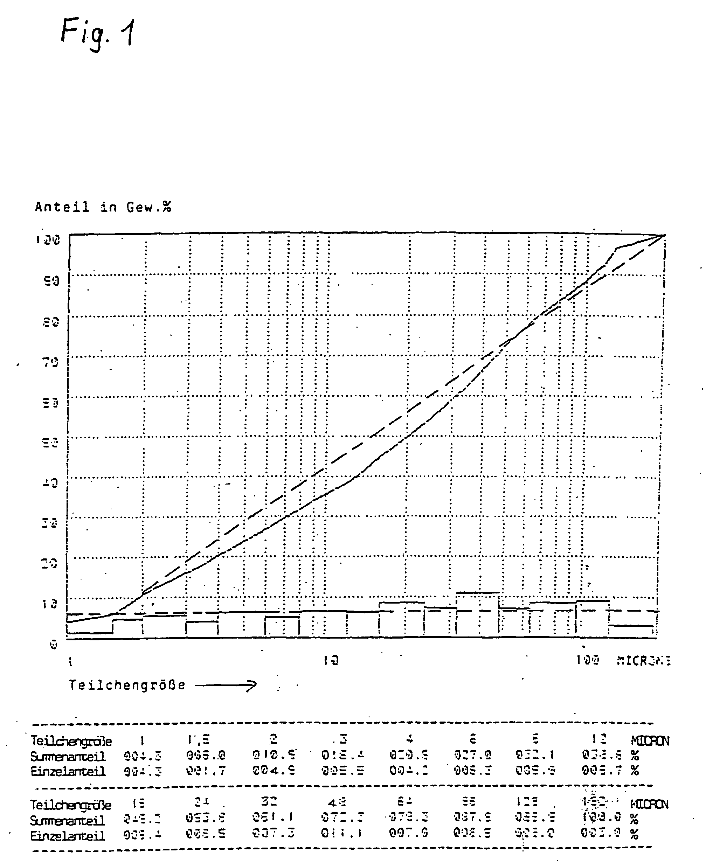

Ein Zementfließestrich wurde so eingestellt, daß die Kornverteilung der Mehlkornanteile wie im Diagramm gemäß Fig.1 dargestellt, aufgebaut bzw. zusammengesetzt ist. Dabei ist auf der X-Achse die Teilchengröße in logarithmischer Zunahme und auf der Y-Achse der jeweilige Anteil in Gewichtsprozenten dargestellt. Unterhalb des Diagrammes sind einzelne Teilchengrößen, ihr zugehöriger Summenanteil und ihr jeweiliger Einzelanteil noch einmal in Form einer Tabelle angegeben. Demgemäß ist von einem Mehlkornanteil mit der Teilchengröße 1 Micron ein Summenanteil von 4,3 Gewichtsprozenten vorhanden. Die nächst größere aufgetragene Teilchengröße von 1,5 Micron ist mit einem Einzelanteil von 1,7 % vorhanden, so daß von den Feinkornanteilen einer Teilchengröße von 1 Micron und 1,5 Micron insgesamt 5 Gewichtsprozente vorhanden sind usw.. Die in Fig.1 größte Teilchengröße ist 192 Micron, also etwas unterhalb von 0,2 mm und Bestandteile in dieser Teilchengröße machen 3% des gesamten Mehlkornanteiles einer Baustoffmischung aus.

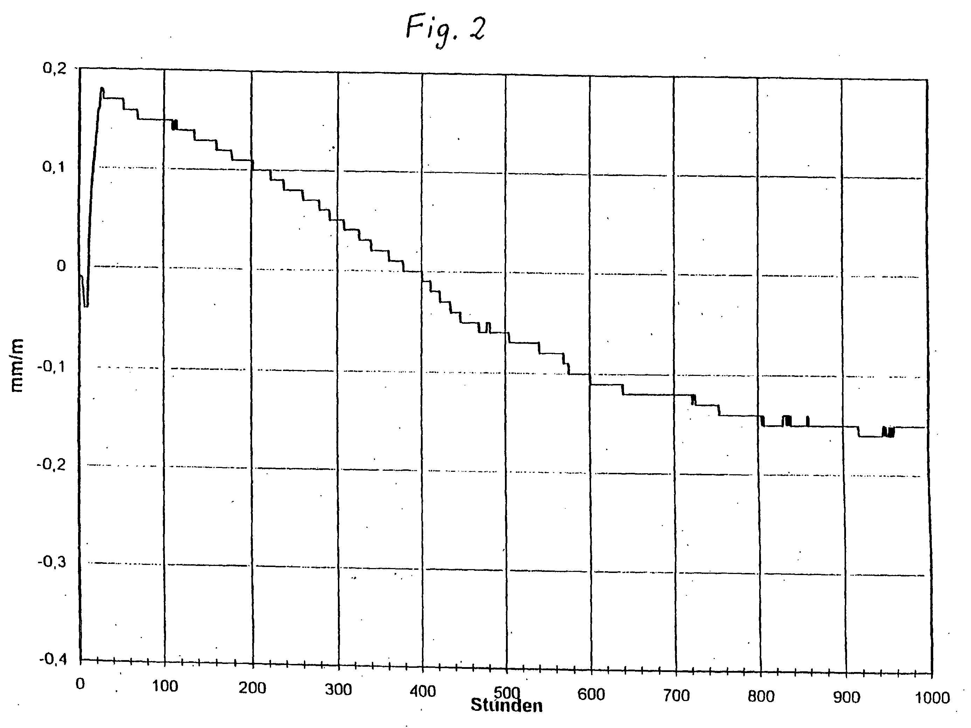

Dies führt gemäß dem Diagramm in Fig.2 zu einem maximalen Schrumpfen von 0,04 mm/m, danach zu einem Aufquellen und anschließend zu einem Trocknungsschwinden nach 1000 Std. von 0,33 mm/m. Dabei ist der maximale Quellwert als 0-Bezugswert für das Trocknungsschwinden herangezogen.

Ein derartig eingestellter Zementfließestrich, bei welchem also die Gewichtsanteile der einzelnen Kornfraktionen der pulverförmigen Mehlkornanteile der Gesamtmischung von nahezu 0 bis etwa 0,1 mm jeweils etwa gleich groß sind, führt in dem Diagramm gemäß Fig.1 zu einem weitgehend linearen Verlauf, der wie die ideale Korngrößenverteilung in Fig.1 mit einer gestrichelten Linie im Vergleich zu dem tatsächlichen Kurvenverlauf gesetzt ist.

Ein derartig eingestellter Zementfließestrich ist in der Praxis bis 200 m² Feldgröße ohne Fugen verlegt worden und rissefrei geblieben.

### Beispiel 2:

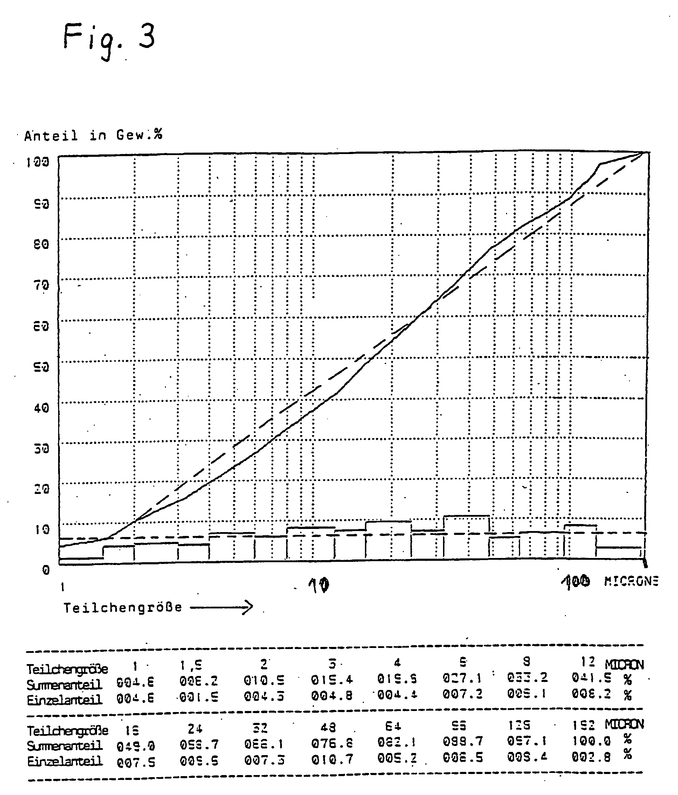

Die Baustoffmischung für einen Zementfließestrich gemäß Beispiel 2 wurde hinsichtlich der Kornverteilung im Mehlkornbereich noch näher an die ideale Kornverteilung gemäß der gestrichelten Linie in dem Diagramm nach Fig.1 und nach Fig.3 angepaßt, wie sich auch aus der Tabelle unterhalb dem Diagramm der Fig.3 zeigt. Dabei ist auch der jeweilige Einzelanteil besser an die ideale horizontale gestrichelte Linie einer idealen jeweiligen Anteilsmenge der verschiedenen Teilchengröße gegenüber dem Beispiel nach Fig.1 noch etwas verbessert.

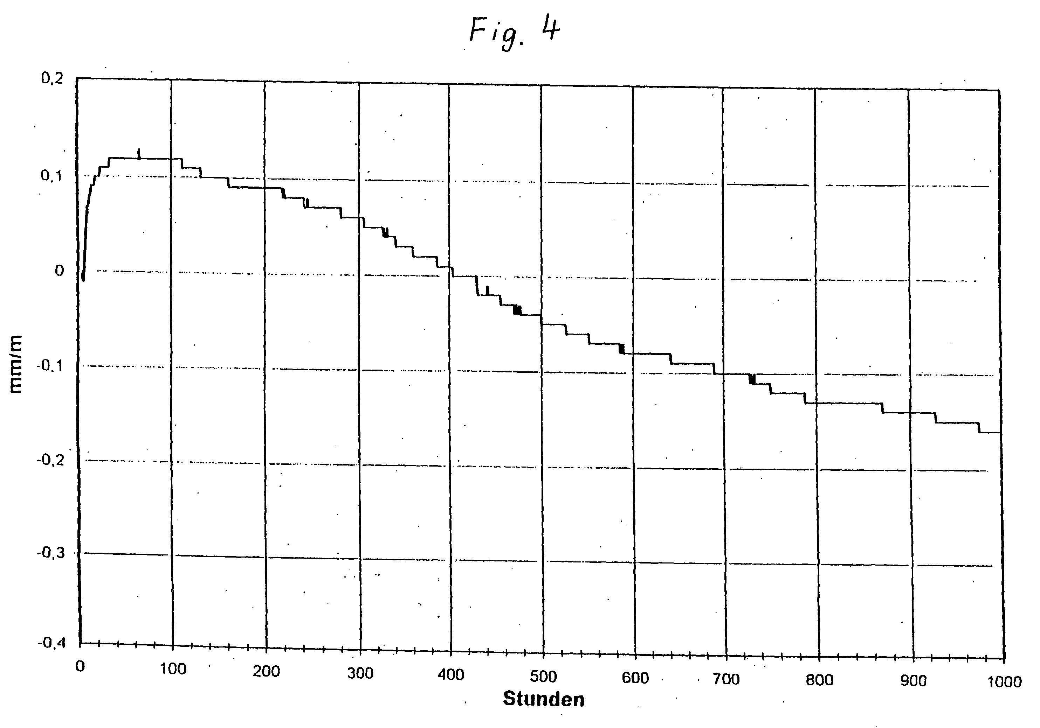

Dies führt zu einem Schrumpfungs- und Schwindungsverhalten gemäß dem Diagramm in Fig.4, das heißt, das anfängliche Schrumpfen wird hierbei praktisch vermieden und nach 1000 Std. wurde ein Trocknungsschwinden von nur 0,29 mm/m gegenüber dem größten Quellwert gemessen. Auch dieser Zementfließestrich bleibt in der Praxis wie der nach Beispiel 1 bis zu einer Feldgröße von 200 m² selbst bei schwierigen Geometrien rissefrei.

### Vergleichsbeispiel:

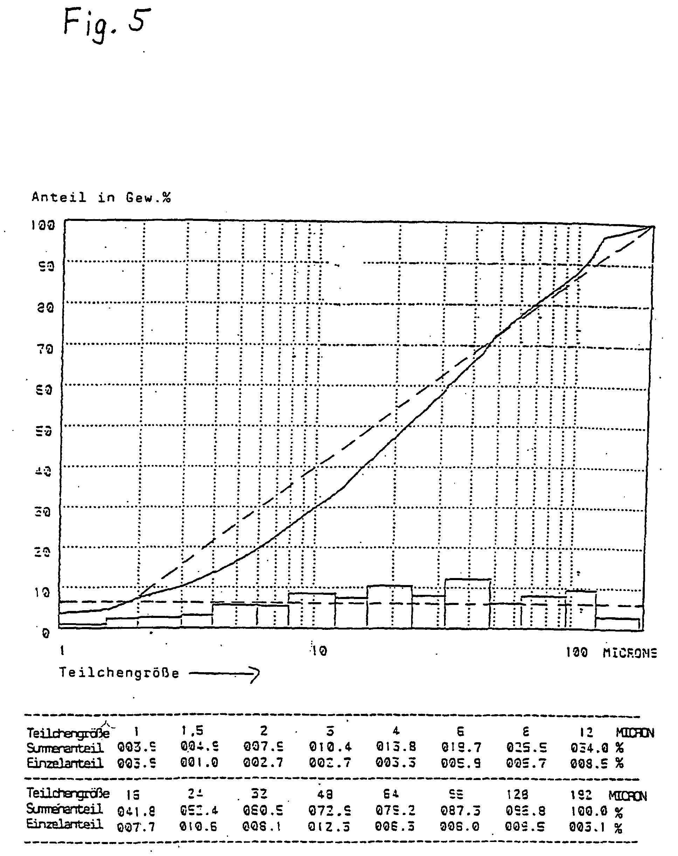

Zur Verdeutlichung wurde eine Baustoffmischung für einen Zementfließestrich in dem Vergleichsbeispiel gemäß dem Diagramm in Fig.5 so eingestellt, daß die Kornverteilung der Mehlkornanteile mit einer Größe bis 0,2 mm einen von der erfindungsgemäßen Verteilung stark abweichenden Verlauf aufweist, was durch die große Abweichung der tatsächlichen Verteilungskurve von der idealen gestrichelten Linie verdeutlicht.

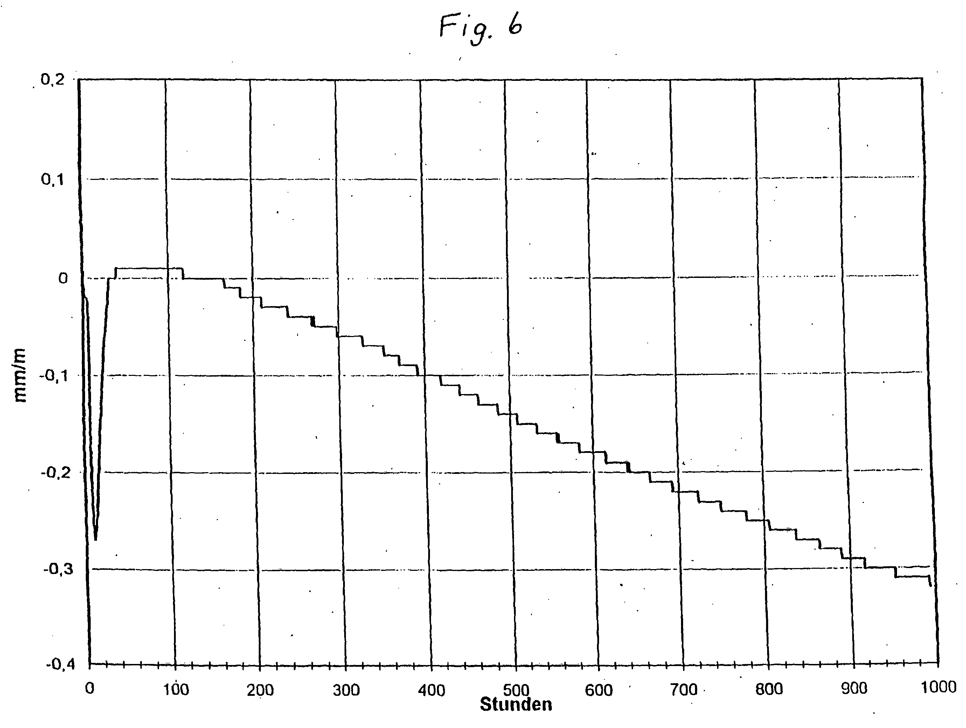

Dies führt gemäß dem Diagramm in Fig.6 zunächst zu einem maximalen Schrumpfen von 0,2 mm/m in der plastischen Phase, so daß das anschließende Quellen praktisch nur wieder bis zu dem Ausgangswert führt, von welchem aus dann ein Trocknungsschwinden von ebenfalls 0,33 mm/m nach 1000 Std. gemessen wurde, wiederum auf das maximale Quellen als Null-Bezugswert bezogen.

In der Praxis zeigt dieser Zementfließestrich eine deutliche Rissebildung, obwohl das Trocknungsschwinden etwa den gleichen Wert wie dasjenige nach dem Beispiel gemäß Fig.1 und 2 aufweist. Da in beiden Beispielen der gleiche Zement, das gleiche Fließmittel und die gleichen sonstigen Rezepturbestandteile jeweils unverändert verwendet wurden, mit Ausnahme der Mahlfeinheit des verwendeten Füllers, ergibt sich erwartungsgemäß zwar der gleiche Wert für das Trocknungsschwinden, aufgrund der abweichenden Verteilung der Teilchengrößen der einzelnen Mehlkornbestandteile aber ein unterschiedliches Verhalten bei der Rissebildung, wonach nämlich in Beispiel 1 die Rissefreiheit bei 200 m² Feldgröße erzielt wurde, während bei dem Vergleichsbeispiel aufgrund der ungünstigen Verteilung der einzelnen Anteile der Mehlkornbestandteile eine Rissebildung auftrat.

Somit zeigt sich, daß bei gleichem Ausmaß des Trocknungsschwindens die Risseabfälligkeit des Bauteiles aus der Baustoffmischung um so geringer ist, je geringer das Schrumpfen am Anfang in der noch plastischen Phase ist.

In einer Baustoffmischung zum Herstellen von Fließestrich, die mehrere pulverförmige Mehlkornanteile und dabei bevorzugt Zement, auch in unterschiedlicher Kornverteilung, und/oder wenigstens einen pulverförmigen Füller enthält, sind die Gewichtsanteile der einzelnen Kornfraktionen der pulverförmigen Mehlkornanteile der Gesamtmischung in einer Größe von 0,001 mm bis 0,2 mm jeweils etwa gleich groß, so daß in der logarithmischen Darstellung der Gewichtsprozentanteile dieser Mehlkornanteile über ihrer zunehmenden Größenverteilung ein weitgehend linearer Verlauf gegeben ist. Bei einer zu großen Abweichung von diesem linearen verlauf erfolgt in der ersten plastischen Phase ein zu starkes Schrumpfen und somit in der anschließenden Trocknungsphase zumindest bei einer größeren Feldgröße eine Rissebildung.

## Patentansprüche

1. Fließestrich-Trockenmischung mit wenigstens zwei pulverförmigen Mehlkornanteilen, nämlich Zement und pulverförmigem Füller, ferner mit Sand und/oder Kies, im Übrigen kalziumsulfatfrei, **dadurch gekennzeichnet, dass** die Darstellung der kumulativen Gewichtsprozentanteile der Mehlkornanteile der Gesamtmischung in einer Größe von 0,001 Millimeter bis 0,2 Millimeter über ihrer zunehmenden, logarithmisch dargestellten Größenverteilung einen linearen Verlauf oder im Wesentlichen linearen Verlauf ergibt, wobei der im Wesentlichen lineare Verlauf durch folgende Werte bestimmt wird:
für Mehlkornanteile in einer Größe bis 0,001 mm beträgt der Summenanteil 4,3 % bis 4,6 %,
für Mehlkornanteile in einer Größe bis 0,0015 mm beträgt der Summenanteil 6,0 % bis 6,2 %,
für Mehlkornanteile in einer Größe bis 0,002 mm beträgt der Summenanteil 10,5 % bis 10,9 %,
für Mehlkornanteile in einer Größe bis 0,003 mm beträgt der Summenanteil 15,4 % bis 16,4 %,
für Mehlkornanteile in einer Größe bis 0,004 mm beträgt der Summenanteil 19,9 % bis 20,6 %,
für Mehlkornanteile in einer Größe bis 0,006 mm beträgt der Summenanteil 27 % bis 27,1 %,
für Mehlkornanteile in einer Größe bis 0,008 mm beträgt der Summenanteil 32,1 % bis 33,2 %,
für Mehlkornanteile in einer Größe bis 0,012 mm beträgt der Summenanteil 38,8 % bis 41,5 ,%,
für Mehlkornanteile in einer Größe bis 0,016 mm beträgt der Summenanteil 45,2 % bis 49,0 %,
für Mehlkornanteile in einer Größe bis 0,024 mm beträgt der Summenanteil 53,8 % bis 58,7 %,
für Mehlkornanteile in einer Größe bis 0,032 mm beträgt der Summenanteil 61,1 % bis 66,1 %,
für Mehlkornanteile in einer Größe bis 0,048 mm beträgt der Summenanteil 72,3 % bis 76,8 %,
für Mehlkornanteile in einer Größe bis 0,064 mm beträgt der Summenanteil 79,3 % bis 82,1 %,
für Mehlkornanteile in einer Größe bis 0,096 mm, beträgt der Summenanteil 87,9 % bis 88,7 %,
für Mehlkornanteile in einer Größe bis 0,128 mm beträgt der Summenanteil 96,9 % bis 97,1 % und
für Mehlkornanteile in einer Größe bis 0,192 mm beträgt der Summenanteil 100 %.

2. Trockenmischung nach Anspruch 1 , **dadurch gekennzeichnet, daß** sie als zusätzlichen Mischungsbestandteil ein ihr in trockenem Zustand oder beim Anmachen mit Flüssigkeit zugemischtes Fließmittel enthält.

3. Fließestrich-Trockenmischung nach einem der Ansprüche 1 oder 2, **dadurch gekennzeichnet, daß** sie einen weiteren pulverförmigen Mehlkornanteil wie Flugasche enthält.

4. Fließestrich-Trockenmischung nach einem der Ansprüche 1 bis 3, **dadurch gekennzeichnet, daß** die Mengen- und Gewichtsanteile der weiteren Bestandteile wie Sand oder Kies nach DIN 1045 gewählt sind.

5. Fließestrich-Trockenmischung nach einem der Ansprüche 1 bis 4, **dadurch gekennzeichnet, daß** sie als weiteren pulverförmigen Mehlkornanteil Branntkalk in der Feinkörnung bis etwa 0,2 mm Korngröße enthält und die Mengenverhältnisse dieses Branntkalk-Anteiles an die Mengenverhältnisse der anderen Mehlkorn- oder Feinkornbestandteile so angepasst ist, daß in der logarithmischen Darstellung ein linearer oder im wesentlichen linearer Verlauf gegeben ist.

6. Fließestrich-Trockenmischung nach einem der Ansprüche 1 bis 5, **dadurch gekennzeichnet, daß** das der Fließestrich-Trockenmischung zugemischte Fließmittel aus Melamin-Formaldehyd-Polykondensaten und/oder kondensierten Naphtalinsulfonaten und/oder Ligninsulfonaten und/oder kondensierten Phenol-Formaldehyd-Polymerisaten und/oder carboxylierten Polyäthern besteht.

7. Fließestrich-Trockenmischung nach einem der Ansprüche 1 bis 6, **dadurch gekennzeichnet, daß** sie Abbindeverzögerer oder Abbindebeschleuniger enthält.

8. Verfahren zum Herstellen einer Fließestrich-Trockenmischung nach einem der Ansprüche 1 bis 8, wobei Sand und/oder Kies mit wenigstens zwei pulverförmigen Mehlkorn-anteilen, nämlich Zement und einem pulverförmigen Füller, gemischt werden, **dadurch gekennzeichnet, daß** zunächst die Korngrößenverteilung im Zement bestimmt und dann die anderen Mehlkornanteile so gemahlen und gesichtet werden, daß deren Korngrößenverteilung sich zur Korngrößenverteilung des Zements so ergänzt, daß die Mehlkornanteile der Gesamtmischung in einer Größe von 0,001 mm bis 0,2 mm über ihrer zunehmenden, logarithmisch dargestellten Größenverteilung einen linearen Verlauf oder im wesentlichen linearen Verlauf ergeben, wobei der im Wesentlichen lineare Verlauf durch folgende Werte bestimmt wird:
für Mehlkornanteile in einer Größe bis 0,001 mm beträgt der Summenanteil 4,3 % bis 4,6 %,
für Mehlkornanteile in einer Größe bis 0,0015 mm beträgt der Summenanteil 6,0 % bis 6,2 %,
für Mehlkornanteile in einer Größe bis 0,002 mm beträgt der Summenanteil 10,5 % bis 10,9 %,
für Mehlkornanteile in einer Größe bis 0,003 mm beträgt der Summenanteil 15,4 % bis 16,4 %,
für Mehlkornanteile in einer Größe bis 0,004 mm beträgt der Summenanteil 19,9 % bis 20,6 %,
für Mehlkornanteile in einer Größe bis 0,006 mm beträgt der Summenanteil 27 % bis 27,1 %,
für Mehlkornanteile in einer Größe bis 0,008 mm beträgt der Summenanteil 32,1 % bis 33,2 %,
für Mehlkornanteile in einer Größe bis 0,012 mm beträgt der Summenanteil 38,8 % bis 41,5 ,%,
für Mehlkornanteile in einer Größe bis 0,016 mm beträgt der Summenanteil 45,2 % bis 49,0 %,
für Mehlkornanteile in einer Größe bis 0,024 mm beträgt der Summenanteil 53,8 % bis 58,7 %,
für Mehlkornanteile in einer Größe bis 0,032 mm beträgt der Summenanteil 61,1 % bis 66,1 %,
für Mehlkornanteile in einer Größe bis 0,048 mm beträgt der Summenanteil 72,3 % bis 76,8 %,
für Mehlkornanteile in einer Größe bis 0,064 mm beträgt der Summenanteil 79,3 % bis 82,1 %,
für Mehlkornanteile in einer Größe bis 0,096 mm beträgt der Summenanteil 87,9 % bis 88,7 %,
für Mehlkornanteile in einer Größe bis 0,128 mm beträgt der Summenanteil 96,9 % bis 97,1 % und
für Mehlkornanteile in einer Größe bis 0,192 mm beträgt der Summenanteil 100 %.

9. Verfahren nach Anspruch 8, **dadurch gekennzeichnet, daß** die Korngrößenverteilung mit einem Lasergranulometer bestimmt wird.

10. Verfahren nach Anspruch 8 oder 9, **dadurch gekennzeichnet, daß** der Trockenmischung wenigstens ein weiterer pulverförmiger Mehlkornanteil wie Flugasche in trockenem Zustand zugemischt wird.

11. Verfahren nach einem der Ansprüche 8 bis 10, **dadurch gekennzeichnet, daß** der Trockenmischung als weiterer Feinkorn- oder Mehlkornanteil Branntkalk in der Feinkörnung bis 0,2 mm zugemischt und die Gewichtsanteile der einzelnen Kornfraktionen dieser Gesamtmischung so eingestellt werden, daß in der logarithmischen Darstellung dieser im Feinkornbereich liegenden Gewichtsanteile aller Feinkornanteile ein linearer oder weitgehend linearer Verlauf entsteht.

12. Verfahren nach einem der Ansprüche 8 bis 11, **dadurch gekennzeichnet, daß** der Trockenmischung oder der Anmachflüssigkeit ein Fließmittel, nämlich Melamin-Formaldehyd-Polykondensate und/oder kondensierte Naphtalinsulfonate und/oder Ligninsulfonate und/oder kondensierte Phenol-Formaldehyd-Polymerisate und/oder carboxylierte Polyäther zugemischt wird.

13. Verfahren nach einem der Ansprüche 8 bis 12, **dadurch gekennzeichnet, daß** der Trockenmischung Abbindeverzögerer oder Abbindebeschleuniger zugemischt werden.

14. Verfahren nach einem der vorstehenden Ansprüche, **dadurch gekennzeichnet, daß** die oberhalb der Korngröße der Feinkorn- oder Mehlkornbestandteile bemessenen Mischungsbestandteile, insbesondere Sand und/oder Kies nach den Regeln der Betontechnik nach DIN 1045 zugemischt werden.

## Claims

1. Dry mix for a pourable flooring compound having at least two powdered finely ground ingredients, namely cement and powdered filler, as well as sand and/or gravel, said mix also being free from calcium sulphate, **characterised in that** the representation of the cumulative percentages by weight of the finely ground ingredients of the mix as a whole ranging from 0.001 millimetres to 0.2 millimetres in size produces a linear pattern or a substantially linear pattern over their increasing size distribution shown as a logarithmic chart, the substantially linear pattern being determined by the following values:
for finely ground ingredients measuring up to 0.001 mm the total amount is 4.3% to 4.6%,
for finely ground ingredients measuring up to 0.0015 mm the total amount is 6.0% to 6.2%,
for finely ground ingredients measuring up to 0.002 mm the total amount is 10.5% to 10.9%,
for finely ground ingredients measuring up to 0.003 mm the total amount is 15.4% to 16.4%,
for finely ground ingredients measuring up to 0.004 mm the total amount is 19.9% to 20.6%,
for finely ground ingredients measuring up to 0.006 mm the total amount is 27% to 27.1%,
for finely ground ingredients measuring up to 0.008 mm the total amount is 32.1% to 33.2%,
for finely ground ingredients measuring up to 0.012 mm the total amount is 38.8% to 41.5%,
for finely ground ingredients measuring up to 0.016 mm the total amount is 45.2% to 49.0%,
for finely ground ingredients measuring up to 0.024 mm the total amount is 53.8% to 58.7%,
for finely ground ingredients measuring up to 0.032 mm the total amount is 61.1% to 66.1%,
for finely ground ingredients measuring up to 0.048 mm the total amount is 72.3% to 76.8%,
for finely ground ingredients measuring up to 0.064 mm the total amount is 79.3% to 82.1%,
for finely ground ingredients measuring up to 0.096 mm the total amount is 87.9% to 88.7%,
for finely ground ingredients measuring up to 0.128 mm the total amount is 96.9% to 97.1% and
for finely ground ingredients measuring up to 0.192 mm the total amount is 100%.

2. Dry mix according to claim 1, **characterised in that** it contains as an additional ingredient of the mix a flow agent which is added thereto in the dry state or when the mix is made up with liquid.

3. Dry mix for a pourable flooring compound according to one of claims 1 and 2, **characterised in that** it contains another powdered finely ground ingredient such as flue ash.

4. Dry mix for a pourable flooring compound according to one of claims 1 to 3, **characterised in that** the proportions by quantity and weight of the other ingredients such as sand or gravel are selected in accordance with DIN 1045.

5. Dry mix for a pourable flooring compound according to one of claims 1 to 4, **characterised in that** it contains as another powdered finely ground ingredient caustic lime with a fine particle size of up to about 0.2 mm and the proportion of this caustic lime fraction is adapted to the proportions of the other finely ground or fine-grained ingredients so that shown as a logarithmic chart a linear or substantially linear pattern is obtained.

6. Dry mix for a pourable flooring compound according to one of claims 1 to 5, **characterised in that** the flow agent mixed into the dry pourable flooring compound mix consists of melamine-formaldehyde polycondensates and/or condensed naphthalene sulphonates and/or lignin sulphonates and/or condensed phenol-formaldehyde polymers and/or carboxylated polyethers.

7. Dry mix for a pourable flooring compound according to one of claims 1 to 6, **characterised in that** it contains setting retarders or setting accelerators.

8. Process for producing a dry mix for a pourable flooring compound according to one of claims 1 to 8, wherein sand and/or gravel are mixed with at least two powdered finely ground ingredients, namely cement and a powdered filler, **characterised in that** first the particle size distribution is measured on the cement and then the other finely ground fractions are ground and screened so that their particle size distribution together with the particle size distribution of the cement ensure that the finely ground fractions of the mix as a whole ranging in size from 0.001 mm to 0.2 mm produce a linear or substantially linear pattern over their increasing size distribution shown as a logarithmic chart, the substantially linear pattern being determined by the following values:
for finely ground ingredients measuring up to 0.001 mm the total amount is 4.3% to 4.6%,
for finely ground ingredients measuring up to 0.0015 mm the total amount is 6.0% to 6.2%,
for finely ground ingredients measuring up to 0.002 mm the total amount is 10.5% to 10.9%,
for finely ground ingredients measuring up to 0.003 mm the total amount is 15.4% to 16.4%,
for finely ground ingredients measuring up to 0.004 mm the total amount is 19.9% to 20.6%,
for finely ground ingredients measuring up to 0.006 mm the total amount is 27% to 27.1%,
for finely ground ingredients measuring up to 0.008 mm the total amount is 32.1% to 33.2%,
for finely ground ingredients measuring up to 0.012 mm the total amount is 38.8% to 41.5%,
for finely ground ingredients measuring up to 0.016 mm the total amount is 45.2% to 49.0%,
for finely ground ingredients measuring up to 0.024 mm the total amount is 53.8% to 58.7%,
for finely ground ingredients measuring up to 0.032 mm the total amount is 61.1% to 66.1%,
for finely ground ingredients measuring up to 0.048 mm the total amount is 72.3% to 76.8%,
for finely ground ingredients measuring up to 0.064 mm the total amount is 79.3% to 82.1%,
for finely ground ingredients measuring up to 0.096 mm the total amount is 87.9% to 88.7%,
for finely ground ingredients measuring up to 0.128 mm the total amount is 96.9% to 97.1% and
for finely ground ingredients measuring up to 0.192 mm the total amount is 100%.

9. Process according to claim 8, **characterised in that** the particle size distribution is determined using a laser granulometer.

10. Process according to claim 8 or 9, **characterised in that** at least one additional powdered finely ground fraction such as flue ash is added to the dry mixture in the dry state.

11. Process according to one of claims 8 to 10, **characterised in that** caustic lime with a fine particle size of up to 0.2 mm is added to the dry mix as an additional fine-grained or finely ground fraction and the amounts by weight of the individual particle fractions of the mix as a whole are adjusted so that in a logarithmic chart of these amounts by weight of all the fine-grained fractions falling within the fine-grained range a linear or substantially linear pattern is obtained.

12. Process according to one of claims 8 to 11, **characterised in that** a flow agent, specifically melamine-formaldehyde polycondensates and/or condensed naphthalenesulphonates and/or lignin sulphonates and/or condensed phenol-formaldehyde polymers and/or carboxylated polyethers, is added to the dry mix or to the mixing liquid.

13. Process according to one of claims 8 to 12, **characterised in that** setting retarders or setting accelerators are added to the dry mix.

14. Process according to one of the preceding claims, **characterised in that** the ingredients of the mix with dimensions greater than the particle size of the fine-grained or finely ground ingredients, particularly sand and/or gravel, are added in accordance with the concrete technology regulations according to DIN 1045.

## Revendications

1. Mélange sec pour chape auto-nivelante contenant au moins deux fractions farineuses poudreuses, à savoir du ciment et une charge poudreuse, contenant en outre du sable et/ou des gravillons, du reste exempt de sulfate de calcium, **caractérisé en ce que** la représentation de la fraction cumulative des pourcentages pondéraux des fractions farineuses de la totalité du mélange, selon une taille comprise entre 0,001 millimètre et 0,2 millimètre sur sa répartition dimensionnelle croissante représentée de façon logarithmique, conduit à un tracé linéaire ou à un tracé sensiblement linéaire, le tracé sensiblement linéaire étant déterminé par les valeurs suivantes :
pour des fractions farineuses d'une taille allant jusqu'à 0,001 mm, la fraction de la somme est comprise entre 4,3 % et 4,6 %,
pour des fractions farineuses d'une taille allant jusqu'à 0,0015 mm, la fraction de la somme est comprise entre 6,0 % et 6,2 %,
pour des fractions farineuses d'une taille allant jusqu'à 0,002 mm, la fraction de la somme est comprise entre 10,5 % et 10,9 %,
pour des fractions farineuses d'une taille allant jusqu'à 0,003 mm, la fraction de la somme est comprise entre 15,4 % et 16,4 %,
pour des fractions farineuses d'une taille allant jusqu'à 0,004 mm, la fraction de la somme est comprise entre 19,9 % et 20,6 %,
pour des fractions farineuses d'une taille allant jusqu'à 0,006 mm, la fraction de la somme est comprise entre 27 % et 27,1 %,
pour des fractions farineuses d'une taille allant jusqu'à 0,008 mm, la fraction de la somme est comprise entre 32,1 % et 33,2 %,
pour des fractions farineuses d'une taille allant jusqu'à 0,012 mm, la fraction de la somme est comprise entre 38,8 % et 41,5 %,
pour des fractions farineuses d'une taille allant jusqu'à 0,016 mm, la fraction de la somme est comprise entre 45,2 % et 49,0 %,
pour des fractions farineuses d'une taille allant jusqu'à 0,024 nun, la fraction de la somme est comprise entre 53,8 % et 58,7 %,
pour des fractions farineuses d'une taille allant jusqu'à 0,032 mm, la fraction de la somme est comprise entre 61,1 % et 66,1 %,
pour des fractions farineuses d'une taille allant jusqu'à 0,048 mm, la fraction de la somme est comprise entre 72,3 % et 76,8 %,
pour des fractions farineuses d'une taille allant jusqu'à 0,064 mm, la fraction de la somme est comprise entre 79,3 % et 82,1 %,
pour des fractions farineuses d'une taille allant jusqu'à 0,096 mm, la fraction de la somme est comprise entre 87,9 % et 88,7 %,
pour des fractions farineuses d'une taille allant jusqu'à 0,128 mm, la fraction de la somme est comprise entre 96,9 % et 97,1 %, et
pour des fractions farineuses d'une taille allant jusqu'à 0,192 mm, la fraction de la somme s'élève à 100 %.

2. Mélange sec selon la revendication 1, **caractérisé en ce que** qu'il contient un solvant mélangé avec lui à l'état sec ou délayé avec un liquide en tant qu'ingrédient de mélange supplémentaire.

3. Mélange sec pour chape auto-nivelante selon l'une des revendications 1 ou 2, **caractérisé en ce qu'**il contient une autre fraction farineuse poudreuse telle que de la cendre volante.

4. Mélange sec pour chape auto-nivelante selon l'une des revendications 1 à 3, **caractérisé en ce que** les proportions en quantité et en poids des autres ingrédients, comme le sable ou les gravillons, sont sélectionnées en fonction de la norme DIN 1045.

5. Mélange sec pour chape auto-nivelante selon l'une des revendications 1 à 4, **caractérisé en ce qu'**il comprend de la chaux vive ayant une granulation fine d'environ 0,2 mm de grosseur de grain en tant qu'autre fraction farineuse poudreuse et **en ce que** les rapports quantitatifs de cette fraction de chaux vive sont adaptés aux rapports quantitatifs des autres ingrédients farineux ou à grains fins de manière à obtenir un tracé linéaire ou sensiblement linéaire dans la représentation logarithmique.

6. Mélange sec pour chape auto-nivelante selon l'une des revendications 1 à 5, **caractérisé en ce que** le solvant mélangé au mélange sec pour chape auto-nivelante est composé de polycondensats Mélamine- formaldéhyde et/ou de sulfonates condensés de naphtaline et/ou de sulfonates de lignine et/ou de polymères condensés de phénol-formaldéhyde et/ou de polyéthers carboxyliques.

7. Mélange sec pour chape auto-nivelante selon l'une des revendications 1 à 6, **caractérisé en ce qu'**il contient des retardateurs de prise ou des accélérateurs de prise.

8. Procédé de fabrication d'un mélange sec pour chape auto-nivelante selon l'une des revendications 1 à 8, du sable et/ou des gravillons étant mélangés avec au moins deux fractions farineuses poudreuses, à savoir du ciment et une charge poudreuse, **caractérisé en ce que** la répartition dimensionnelle des grains est tout d'abord déterminée dans le ciment et **en ce que** les autres fractions farineuses sont ensuite broyées et tamisées de telle sorte que leur répartition dimensionnelle granuleuse se complète par rapport à la répartition dimensionnelle granuleuse du ciment de telle manière que les fractions farineuses de la totalité du mélange, selon une taille comprise entre 0,001 millimètre et 0,2 millimètre sur sa répartition dimensionnelle croissante représentée de façon logarithmique, conduisent à un tracé linéaire ou à un tracé sensiblement linéaire, le tracé sensiblement linéaire étant déterminé par les valeurs suivantes :
pour des fractions farineuses d'une taille allant jusqu'à 0,001 mm, la fraction de la somme est comprise entre 4,3 % et 4,6 %,
pour des fractions farineuses d'une taille allant jusqu'à 0,0015 mm, la fraction de la somme est comprise entre 6,0 % et 6,2 %,
pour des fractions farineuses d'une taille allant jusqu'à 0,002 mm, la fraction de la somme est comprise entre 10,5 % et 10,9 %,
pour des fractions farineuses d'une taille allant jusqu'à 0,003 mm, la fraction de la somme est comprise entre 15,4 % et 16,4 %,
pour des fractions farineuses d'une taille allant jusqu'à 0,004 mm, la fraction de la somme est comprise entre 19,9 % et 20,6 %,
pour des fractions farineuses d'une taille allant jusqu'à 0,006 mm, la fraction de la somme est comprise entre 27 % et 27,1 %,
pour des fractions farineuses d'une taille allant jusqu'à 0,008 mm, la fraction de la somme est comprise entre 32,1 % et 33,2 %,
pour des fractions farineuses d'une taille allant jusqu'à 0,012 mm, la fraction de la somme est comprise entre 38,8 % et 41,5 %,
pour des fractions farineuses d'une taille allant jusqu'à 0,016 mm, la fraction de la somme est comprise entre 45,2 % et 49,0 %,
pour des fractions farineuses d'une taille allant jusqu'à 0,024 mm, la fraction de la somme est comprise entre 53,8 % et 58,7 %,
pour des fractions farineuses d'une taille allant jusqu'à 0,032 mm, la fraction de la somme est comprise entre 61,1 % et 66,1 %,
pour des fractions farineuses d'une taille allant jusqu'à 0,048 mm, la fraction de la somme est comprise entre 72,3 % et 76,8 %,
pour des fractions farineuses d'une taille allant jusqu'à 0,064 mm, la fraction de la somme est comprise entre 79,3 % et 82,1 %,
pour des fractions farineuses d'une taille allant jusqu'à 0,096 mm, la fraction de la somme est comprise entre 87,9 % et 88,7 %,
pour des fractions farineuses d'une taille allant jusqu'à 0,128 mm, la fraction de la somme est comprise entre 96,9 % et 97,1 %, et
pour des fractions farineuses d'une taille allant jusqu'à 0,192 mm, la fraction de la somme s'élève à 100 %.

9. Procédé selon la revendication 8, **caractérisé en ce que** la répartition dimensionnelle granuleuse est déterminée avec un granulomètre à laser.

10. Procédé selon la revendication 8 ou 9, **caractérisé en ce que** le mélange sec est mélangé à au moins une autre fraction farineuse poudreuse telle que de la cendre volante à l'état sec.

11. Procédé selon l'une des revendications 8 à 10, **caractérisé en ce que** le mélange sec est mélangé à de la chaux vive ayant une granulométrie fine allant jusqu'à 0,2 mm, en tant qu'autre fraction de grain fin ou farineuse, et **en ce que** la fraction pondérale de chacune des fractions de grain de la totalité de ce mélange est ajustée de manière à obtenir un tracé linéaire ou essentiellement linéaire dans la représentation logarithmique de ces fractions pondérales, situées dans le domaine des grains fins, de toutes les fractions de grains fins.

12. Procédé selon l'une des revendications 8 à 11, **caractérisé en ce qu'**un solvant, à savoir des polycondensats Mélamine- formaldéhyde et/ou des sulfonates condensés de naphtaline et/ou des sulfonates de lignine et/ou des polymères condensés de phénol- formaldéhyde et/ou des polyéthers carboxyliques sont mélangés au mélange sec ou au liquide de gâchage.

13. Procédé selon l'une des revendications 8 à 12, **caractérisé en ce que** des retardateurs de prise ou des accélérateurs de prise sont mélangés au mélange sec.

14. Procédé selon l'une des revendications précédentes, **caractérisé en ce que** les ingrédients de mélange, dimensionnés au-dessus de la taille de grain des ingrédients de grains fin ou farineux, sont mélangés tout particulièrement à du sable et/ou des gravillons selon les règles de la technique de fabrication de béton conformément à la norme DIN 1045.
